# EUROPÄISCHE PATENTSCHRIFT

(11) **EP 0 954 721 B1**
(45) Veröffentlichungstag und Bekanntmachung des Hinweises auf die Patenterteilung: **08.05.2002**
(21) Anmeldenummer: 97948853.3
(22) Anmeldetag: 31.10.1997
(51) Int. Cl.: F23G 1/00, F23G 5/40, F23G 5/12, F23G 5/50

(54) **FEUERBESTATTUNGSEINRICHTUNG**
CREMATION SYSTEM
SYSTEME DE CREMATION

(30) Priorität: 19.12.1996 DE 19652967
(43) Veröffentlichungstag der Anmeldung: 10.11.1999
(73) Patentinhaber: MESSER GRIESHEIM GmbH, 65933 Frankfurt am Main (DE)
(72) Erfinder: MÄRZ, Herbert, D-71686 Remseck (DE)
(74) Vertreter: Dreiss, Fuhlendorf, Steimle & Becker
(86) Internationale Anmeldenummer: EP9706027
(87) Internationale Veröffentlichungsnummer: WO9827387

(56) Entgegenhaltungen:
- AT-B- 396 718
- DE-A- 3 838 894
- DE-A- 4 313 102
- GB-A- 2 180 630
- US-A- 3 446 163

## Beschreibung

Die Erfindung betrifft eine Feuerbestattungseinrichtung für in Särgen befindliche Leichen, mit einem Brennraum, in dessen Wandung zumindest ein Brenner, dem Stützenergie zugeführt werden kann, angeordnet ist, und mit einer Leitung zur Abführung des sich bei der Verbrennung bildenden Rauchgases, von der eine Leitung zur Rezirkulierung eines Teils des Rauchgases abgezweigt ist, und bei der einem Teil des abgezweigten Rauchgases in einem Mischer mindestens zu 90 % reiner Sauerstoff beigemischt und das in den Mischern aus rezirkuliertem Rauchgas und reinem Sauerstoff hergestellte synthetische Gemisch den Brennern zugeführt wird.

Eine derartige Feuerbestattungseinrichtung ist in der deutschen Patentanmeldung 196 28 741.3, angemeldet am 17.07.1996 (zum Zeitpunkt der vorliegenden Anmeldung noch nicht veröffentlicht), beschrieben.

Aufgabe der vorliegenden Erfindung ist es, den gesamten Verfahrensprozess (Verbrennung, Abgasreinigung) als eine geschlossene Einheit so auszubilden, dass ihr flexibler Einsatz unter Berücksichtigung von platz-, energie- und umweltbelastenden Aspekten an jedem beliebig denkbaren Ort möglich wird.

Erfindungsgemäß erfolgt dies durch die Ausbildung einer Feuerbestattungseinrichtung nach Anspruch 1.

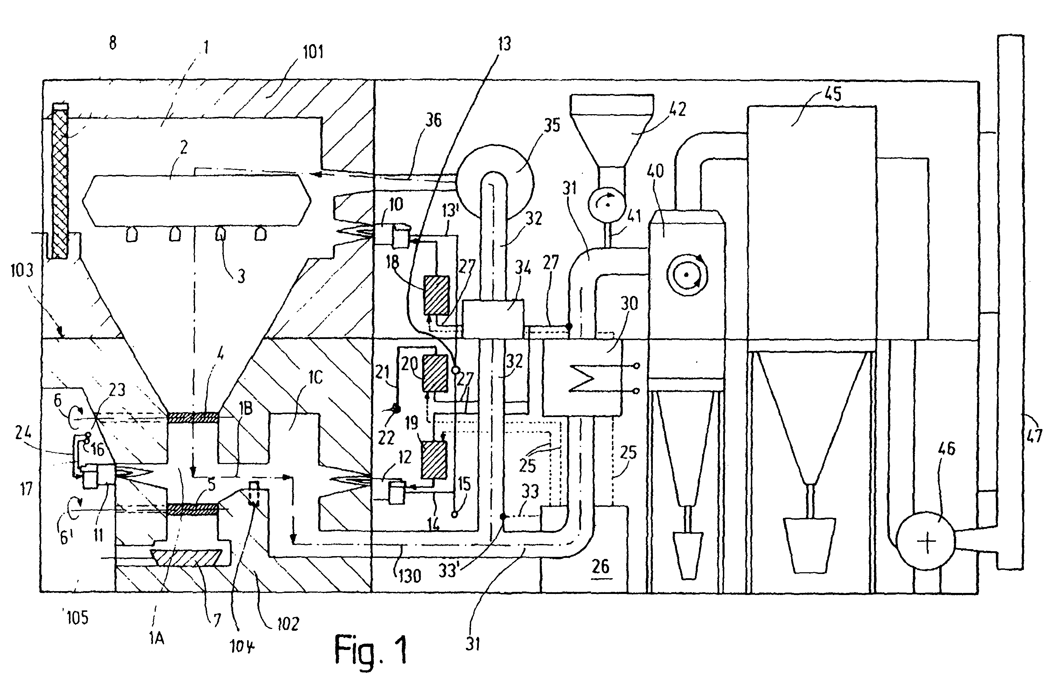

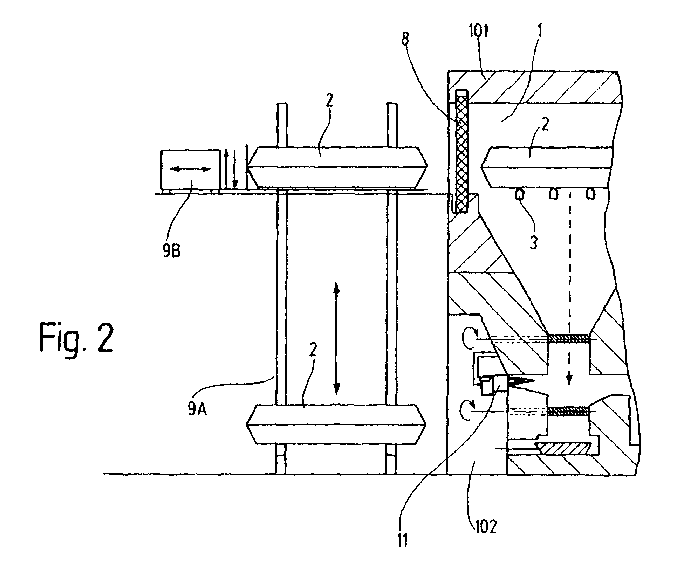

Ein Ausführungsbeispiel der Erfindung und ihrer vorteilhaften Weiterbildungen wird im Folgenden anhand der Figuren 1 und 2 näher beschrieben.

Es stellen dar:
- Figur 1: ein Ausführungsbeispiel;
- Figur 2: das Zusammenwirken einer Hebeeinrichtung und einer Verschiebeeinrichtung mit der Feuerbestattungseinrichtung zur Beladung der letzteren.

Figur 1 zeigt eine Feuerbestattungseinrichtung, die aus dem oberen Modul 101 und dem unteren Modul 102 zusammengesetzt ist. Die Module liegen entlang einer horizontalen Trennebene 103 aneinander an und bilden zusammengesetzt die Feuerbestattungseinrichtung. Die Mittel zur Verbindung der beiden Module miteinander sowie die Mittel zum Transport, mit denen ein einzelner Container mittels eines Tiefladers o. dgl. transportiert werden kann, sind für den Fachmann selbstverständlich und daher im vorliegenden Zusammenhang nicht näher ausgeführt. Das Maß des Containers ist z. B. 9 m x 3,6 m x 2,5 m. Das Modul 101 bildet die obere Einheit; das Modul 102 bildet die untere Einheit.

Die übereinander angeordneten Container-Module beherbergen neben dem Verbrennungsofen, Synairmischer-System, Saugzüge, Wärmetauscher, Elektro- und Regeltechnik, Abgasmesstechnik sowie eine Rauchgasreinigungsanlage. Diese Komponenten sind in den Freiräumen der beiden Containermodule installiert.

Figur 1 zeigt einen Verbrennungsofen 1. Er ist als sog. Etagenofen ausgebildet. Er ist zum Teil in dem oberen Modul 101, zum Teil im unteren Modul 102, also zweiteilig ausgebildet. Dieser Ofen unterscheidet sich vom stationären Etagenofen durch seine Container-Modul-Trennstelle, d. h. er besteht aus zwei Hälften. Der Sarg 2 steht auf Stützen 3. Die Zuführung des Sarges erfolgt mit einer Verschiebeeinrichtung in die dann offene Tür 8 des Verbrennungsofens 1. Der Sarg 2 wird zuvor mit Hilfe einer Hebeeinrichtung 9A (vgl. Fig. 2) in Verschiebehöhe der Tür 8 transportiert. In die Wandung des Verbrennungsofens münden zwei Brenner 10 und 12, deren Stützenergie (z. B. Erdgas) über die Leitungen 13', 14 vom Anschluss 13 zugeführt wird. Links mündet der Brenner 11 in die Wand, dem Stützenergie über Anschluss 13, 15, 16 und Leitung 17 zugeführt wird. Das Gemisch aus über dem Wärmetauscher 30 abgekühltem Rauchgas und über die Leitungen 25 (gestrichelt) zugeführtem Sauerstoff wird in den dazugehörigen Mischern 18 und 19 gebildet und zu den Brennern geführt. Das den Brennern zugeführte Gemisch wird also durch rückgeführtes Rauchgas und Stützenergie gebildet ("Synair").

Die Sauerstoffquelle ist in der Regel ein Flüssig-Sauerstoff-Tank mit Verdampfereinheit, außerhalb der mobilen Anlage aufgestellt und mit Verbindungsleitungen an die Anschluss-Stellen der O₂-Regelstation 26 der Anlage gekoppelt.

Über den Mischer 20 zum Brenner 11 sowie die außerhalb der Zeichnungsebene liegenden Anschlüsse 22, 23 und Leitung 24 wird ein Gemisch aus rückgeführtem Rauch, das mit Sauerstoff gemischt ist, den Brennern 10, 11, 12 zugeführt.

Die Leitung 31, von der die Leitung 32 abzweigt, ist die Rauchgas-Abführleitung des Verbrennungsofens 1.

Der Haupt-Rauchgasmischer 35 des synthetischen Verbrennungskreislaufes wird mit den ca. 800° C heißen Rauchgasen des Verbrennungsofens 1 über die Leitung 32 beaufschlagt. Über die Leitung 33 wird an der Stelle 33' Sauerstoff zugeführt. Rauchgas und Sauerstoff vermischen sich im Mischer 35 und strömen über die Leitung 36 in den Verbrennungsofen 1.

Im Bereich 1B, d. h. vor Nachverbrennung der Rauchgase ist eine CO-Sonde 104 installiert.

Über diese CO-Sonde wird die O₂-Konzentration für das Synairgemisch im Mischer 35 geregelt. In Redundanz zur CO-Sonde wird außerdem die O₂-Konzentration im rückgeführten Rauchgas parallel dazu gemessen.

Da zu Beginn des Verbrennungsprozesses das Angebot an zu verbrennendem Kohlenstoff größer ist als die bei konventionellen Verbrennungsanlagen zugeführte Luftmenge, bildet sich zwangsläufig ein Ungleichgewicht von Kohlenstoff zu Sauerstoff, d. h. dass bei Sauerstoffmangel, und dies ist bei konventionellen Verbrennungen überwiegend der Fall, zwangsläufig CO gebildet wird, welches über den zulässigen Grenzwerten liegt. Es muss folglich in Raum 1C nachverbrannt werden.

Durch die CO-Messung kann bei der Verbrennung der synthetischen Luft (Synair) die Konzentration des Sauerstoffes beliebig bis zum Oxidationsgleichgewicht von C zu O₂ eingestellt werden. Dies ist bei der Verbrennung unter atmosphärischen Bedingungen mit einer O₂-Konzentration von max. 21 % nicht möglich.

Die aus dem Verbrennungskreislauf zwangsläufig auszuschleusende Rauchgasmenge wird über eine in der Zeichnung nicht dargestellte Differenzdruckmessung über eine Regelklappe (nicht dargestellt) geregelt. Da der Verbrennungsofen 1 grundsätzlich in Unterdruck gefahren wird, öffnet die Regelklappe bei steigendem Druck und schließt bei Überschreiten des zulässigen Unterdruckes.

Die auszuschleusende Rauchgasmenge wird zunächst über einen Wärmetauscher 30 auf ca. 120 - 140° C abgekühlt, bevor es über die Leitung 31 zur Rauchgasreinigungsanlage gelangt. Das für die Brenner 10, 11, 12 benötigte auf ca. 120 - 140° C abgekühlte Rauchgas wird von der Leitung 31 über eine Stichleitung 27 entnommen. Durch die Zumischung von Sauerstoff kühlt das Rauchgas weiter ab und ermöglicht somit den Einsatz herkömmlicher Industriebrenner.

Die über den Wärmetauscher 30 abgegebene Rauchgaswärme wird externen Verbrauchern zugeführt. Dies ist eine relativ geringe Energiemenge.

Anders als bei konventionellen Verfahren werden bei diesem Verfahren die bei ca. 800° C im Kreislauf geführten Rauchgase nach Durchmischung mit Sauerstoff im Mischer 35 auf ca. 700 - 750° C abgekühlt und über die Leitung 36 dem Verbrennungsofen 1 zurückgeführt. Die Wärmemenge wird also dort abgegeben, wo sie klassischerweise hingehört, nämlich in den Verbrennungsofen 1. Dies ist thermisches Recycling. Durch diesen Vorgang reduzieren sich die Einschaltzyklen der Brenner 10 und 11 erheblich, was sich wiederum in Form von Energieund damit CO₂-Reduktion bemerkbar machen wird. Der Einschaltzyklus des Brenners 12 ist abhängig von der CO-Konzentration im Abgas, die über die CO-Sonde 104 gemessen wird und dient nur als Sicherheitsbremse.

Durch diese Maßnahmen, Verbrennen unter Ausschluss atmosphärischer Bedingungen (78 % des mitgeführten Stickstoffes entfallen), sowie durch die Reduktion der Erdgas-Stützenergie kann das bisher unter konventionellen Verbrennungsbedingungen zu 100 % ausgeschleuste Rauchgas um bis zu 90 % verringert werden, d. h. dass unter den geschilderten Bedingungen nur noch ca. 10 % des Rauchgasvolumenstroms in die Umwelt entlassen werden müssen.

Nur auf dieser Grundlage ist es möglich, eine derart kleine Rauchgasreinigungsanlage in die beschriebenen Containermodule zu integrieren.

Konventionelle Verbrennungsöfen produzieren unter atmosphärischen Verbrennungsbedingungen einen Rauchgasvolumenstrom von 3.000 bis 4.000 Nm³/h und Ofen.

Dagegen produziert derselbe Verbrennungsofen 1 unter Kreislaufbedingungen nur noch ca. 300 - 400 Nm³ Rauchgas pro Stunde und Verbrennungsofen. Ein weiterer verfahrenstechnischer Vorteil liegt in der Abreinigung der Schadstoffe selbst.

Die drastische Verringerung des Rauchgasvolumenstromes bei gleichzeitiger Aufkonzentration der Schadstoffe bewirkt eine erhebliche Verringerung der nach außen gelangenden Restschadstoffe, denn bei modernen Rauchgasreinigungsanlagen ist die Restschadstoff-Fracht direkt proportional der Rauchgasmenge.

Diejenige Menge Rauchgas, die aus dem Verbrennungskreislauf zwangsläufig entweichen muss, wird hinter dem Wärmetauscher 30 über die weiterführende Rauchgasleitung 31 an einen sog. "Flugstrom"-Reaktor 40 geführt, dem ein Adsorbtionsmittel, wie z. B. "Sorbalit" (R) (Name geschützt), eine Mischung aus Kalkhydrid und pulverisiertem Herdofenkoks, über eine Düse 41 von einem Vorratsbehälter 42 her zugeführt wird. Das über die Düse 41 zugeführte pulverförmige Adsorbtionsmittel wird dann in dem anschließenden Gewebefilter 45 wieder abgereinigt, bevor das gereinigte Rauchgas, gefördert vom Saugzug 46, durch den Kamin 47 entweicht.

Wie bereits erwähnt, wird die zur Verbrennung der Stützenergie (z. B. Erdgas) erforderliche Menge Sauerstoff in Abweichung bekannter Verbrennungsanlagen durch Zufuhr von technisch erzeugtem Sauerstoff, der mit einer Reinheit von mindestens 90 % an der O₂-Regelstation 26 entnommen wird, zur Verfügung gestellt.

Die oben beschriebene direkte Zufuhr synthetischer Luft, d. h. des beschriebenen Gemisches aus rezirkuliertem Rauchgas und reinem Sauerstoff, direkt zum Brennraum 1 über den Verbindungsgang 36 dient dazu, den erheblichen Sauerstoffbedarf zu befriedigen, der durch die Verbrennung des Holzes des Sarges 2, insbesondere in der Anfangsphase des Verbrennungsvorganges, entsteht und der normalerweise, d. h.

bei Verbrennung unter Luftzufuhr, durch den limitierten Anteil des Sauerstoffes in der Luft nicht befriedigt werden kann. Bei herkömmlichen Verbrennungsanlagen führt dies in der Anfangsphase zu einem sehr hohen CO-(Kohlenmonoxid)-Anteil, da bei natürlicher Luft die Menge zur Verfügung stehenden Sauerstoffs durch den O₂-Anteil der Luft, der 21 % beträgt, limitiert ist. Bei der Erfindung wird durch direkte Zufuhr von "Synair" ohne Verbrennung von Stützenergie die entstehende CO₂-Menge gesenkt. Durch Einregeln des Sauerstoffes wird die CO-Bildung unterdrückt und kann unter Umständen bis zur Nachweisgrenze gesenkt werden. Die notwendige Energie zur Verbrennung wird in dieser Phase durch den Kohlenstoffanteil des Holzsarges bereitgestellt, so dass deshalb an dieser Stelle und in dieser Phase keine Energiezufuhr von außen mehr erforderlich ist. Dies reduziert einerseits die Bereitstellung (Menge) zuzuführender Stützenergie (Erdgas) über die Brenner und senkt dadurch andererseits den Anteil des Kohlendioxids in der Summe des abzuführenden Rauchgases.

Dass bei diesem gesamten Vorgang nicht nur reiner Sauerstoff zur Verfügung gestellt wird, sondern dieser dem rezirkulierendem Rauchgas zugemischt wird, hat seine Ursache darin, dass ansonsten die Verbrennungstemperatur im Brennraum unzulässig hoch werden würde. Das rückgeführte überwiegend aus CO₂ bestehende Rauchgas übernimmt die Kühlfunktion sowie die Wärmetransportfunktion des substituierten Stickstoffs.

Die Rauchgasrückführung über die Leitung 27 zu den Mischern 18, 19, 20 an die Brenner erfolgt durch Zumischung von Sauerstoff in gekühlter Form. (Siehe auch Verlauf: Rauchgas wird nach Wärmetauscher 30 auf 120 - 140° C gekühlt und dann über Leitung 27 partiell entnommen).

Dagegen wird das über die Leitung 32 dem Mischer 30 zugeführte Rauchgas mit einer Temperatur von ca. 800° C durch Zumischung von Sauerstoff lediglich auf ca. 700 - 750° C heruntergekühlt. Dies hat zur Folge, dass die zusätzlich erforderliche Erhitzung des Brennraumes durch Zufuhr von Stützenergie an den Brennern 10, 11, 12 entsprechend geringer ist. Es reicht aus, den bzw. die Brenner nur in Intervallen, und zwar mit entsprechend größeren Intervallen zwischen Zuschaltperioden zu betreiben. Es ist also möglich, die Brenner teilweise abzuschalten, nämlich dann, wenn - bei Beginn des Verbrennungsvorgangs - der Sarg 2 selbst brennt. Die Aufrechterhaltung einer hohen Temperatur durch Rezirkulierung des ungekühlten Rauchgases sowie die gleichzeitige Zurverfügungstellung von Sauerstoff ermöglichen somit eine Aufrechterhaltung des Verbrennungsvorgangs ohne Stützenergie. Dadurch kann erheblich Energie eingespart werden, und zwar sowohl hinsichtlich der Stützenergie als auch hinsichtlich des Sauerstoffes. Dadurch wiederum erfolgt auch eine Reduzierung des entstehenden Kohlendioxids, das ja auch wegen des "Treibhauseffektes" umweltbedenklich ist.

Die gesamten Vorgänge bedürfen selbstverständlich einer Regelung in Abhängigkeit des Verlaufes des Verbrennungsvorgangs, der, wie bereits erwähnt, stark schwankend verläuft. Dieser erfolgt, soweit nicht oben geschildert, mit bekannten Regelungsmaßnahmen, so dass im vorliegenden Zusammenhang darauf nicht näher eingegangen werden muss (vgl. dazu auch die eingangs erwähnte Patentanmeldung 196 28 741.3).

Ein weiterer Vorteil der hier vorgeschlagenen Verfahrensführung ergibt sich bei der Dimensionierung. Während bei der konventionellen Verbrennung der Rauchgasvolumenstrom ca. 2.200 bis 2.500 Nm³/h Rauchgas beträgt, kann er unter den geschilderten Kreislaufbedingungen auf etwa 1/4, d. h. auf 400 bis 600 Nm³/h ausgelegt werden. Dies ermöglicht eine Verkleinerung und damit auch den Aufbau der geschilderten kompakten transportablen Containereinheit. Containereinheiten, wie sie im Vorstehenden offenbart worden sind, können auch direkt in bestehende Baueinheiten eingebracht und dort zum Verbleib installiert werden. Durch das erfindungsgemäße Verfahren wird ferner die Verbrennungsdauer erheblich abgekürzt. Während bei der konventionellen Feuerbestattung die Verbrennung in der Anfangsphase mehr ein Schwelprozeß (CO-Bildung) ist, wird bei der Erfindung der Verbrennungsvorgang durch die erwähnte konzentrierte Sauerstoffzufuhr erheblich beschleunigt. Dies ist angesichts der zunehmenden Zahl von Feuerbestattungen von großer Bedeutung.

Ein weiterer Vorteil der dargestellten Verfahrensführung besteht in der verringerten Menge der erforderlichen Betriebsmittel. Die üblicherweise erforderliche katalytische Entstickung bzw. die Beigabe von Adsorbtionsmitteln, z. B. "Sorbalit" (R), kann erheblich verringert werden. Da die Verbrennung ohne Luft erfolgt und damit die Entstehung der Stickoxide gegen null geht, dient die Reinigung des Abgases in dem Reaktor 40 im Wesentlichen nur noch der Beseitigung der bei der Verbrennung durch Sarg und Leiche enstehenden Dibenzodioxine und Dibenzofurane sowie der Giftstoffe, die durch die Verbrennung von Schwermetall, z. B. Quecksilber (Anteil an Amalgam-Plomben), usw. entstehen.

### Bezugszeichenliste

- 1: Verbrennungsofen
- 1A: Unterer Brennraum
- 1B: Verbindungsraum
- 1C: Nachbrennraum
- 2: Sarg
- 3: Stütze
- 4: 1. Auffangschale
- 5: 2. Auffangschale
- 6, 6': Wendevorrichtungen
- 7: 3. Auffangschale
- 8: Tür
- 9A: Hebeeinrichtung
- 9B: Verschiebeeinrichtung
- 10: 1. Brenner
- 11: 2. Brenner
- 12: 3. Brenner
- 13: Anschluss
- 13': Leitung
- 14: Leitung
- 15, 16: Anschluss
- 17: Leitung
- 18, 19, 20: Mischer
- 21: Leitung
- 22, 23: Anschlüsse
- 24, 25: Leitungen
- 26: O₂-Regelstation
- 27: Stichleitung
- 30: Wärmetauscher
- 31, 32: Rauchgasleitungen
- 33': Stelle der Mündung von 33 in 31
- 33, 36: Leitung
- 34: Saugzug
- 35: Mischer
- 36: Verbindungsgang
- 40: Reaktor
- 41: Düse
- 42: Vorratsbehälter
- 45: Gewebefilter
- 46: Saugzug
- 47: Kamin
- 101: Oberer Modul
- 102: Unterer Modul
- 103: Horizontale Trennebene
- 104: CO-Sonde
- 105: Ausnehmung
- 130: Leitung

## Patentansprüche

1. Feuerbestattungseinrichtung für in Särgen befindliche Leichen, mit einem Brennraum (1, 1A, 1B, 1C), in dessen Wandung zumindest ein Brenner (10, 11, 12), dem Stützenergie zugeführt werden kann, angeordnet ist, und mit einer Leitung (130) zur Abführung des sich bei der Verbrennung bildenden Rauchgases, von der eine Leitung (27, 32) zur Rezirkulierung eines Teils des Rauchgases abgezweigt ist, und bei der einem Teil des abgezweigten Rauchgases in einem Mischer (18, 19, 20, 35) mindestens zu 90 % reiner Sauerstoff beigemischt und das in den Mischern aus rezirkuliertem Rauchgas und reinem Sauerstoff hergestellte synthetische Gemisch den Brennern zugeführt wird, **dadurch gekennzeichnet, dass** die Feuerbestattungseinrichtung als mobile Einheit ausgebildet und in zwei voneinander trennbaren Containermodulen (101, 102) angeordnet ist, die entlang einer horizontalen Trennebene (103) etwa mittig in eine obere und eine untere modulare Einheit (102) geteilt sind.

2. Feuerbestattungseinrichtung nach Anspruch 1, **dadurch gekennzeichnet, dass** der obere Modul (101) zur Aufbereitung des Gemisches einen Mischer (35) aufweist.

3. Feuerbestattungseinrichtung nach Anspruch 1 oder 2, **dadurch gekennzeichnet, dass** die Sauerstoffkonzentrationen der Brenner über die Mischer (18, 19, 20) unabhängig voneinander eingestellt werden können.

4. Feuerbestattungseinrichtung nach einem der Ansprüche 1 - 3, **dadurch gekennzeichnet, dass** der Verbrennungsofen in zwei Ofenhälften ausgebildet ist, die je in einem der beiden Cointainermodule (101, 102) untergebracht sind.

## Claims

1. Cremation system for corpses disposed in coffins, with a combustion chamber (1, 1A, 1B, 1C), the wall of which is provided with at least one burner (10, 11, 12), to which support energy can be supplied, and a pipe (130) for discharging the flue gas generated by the combustion, from which a pipe (27, 32) for recirculating some of the flue gas is branched off, and wherein at least 90% pure oxygen is added in a mixer (18, 19, 20, 35) to some of the flue gas, and the synthetic mixture produced in the mixers from recirculated flue gas and pure oxygen is fed to the burners, **characterised in that** the cremation system is designed as a mobile unit with two interconnected container modules (101, 102), which are divided along a horizontal partition plane approximately in the middle in an upper and a lower modular unit (102).

2. Cremation system according to claim 1, **characterised in that** the upper modul (101) is provided with a mixer (35) for the treatment of the mixture.

3. Cremation system according to claim 1 or 2, **characterised in that** the oxygen concentrations of the burners are adjustable independently from each other by means of the mixers (18, 19, 20).

4. Cremation system according to one of the claims 1 to 3, **characterised in that** the furnace is divided into two parts which are each disposed in one of the two container modules (101, 102).

## Revendications

1. Système de crémation de cadavres se trouvant dans des cercueils, avec une chambre de combustion (1, 1A, 1B, 1C), dans la paroi de laquelle est disposé au moins un brûleur (10, 11, 12), auquel on peut envoyer de l'énergie d'appoint, et avec une canalisation (130) pour l'évacuation du gaz de combustion créé par la combustion, de laquelle est dérivée une canalisation (27, 32) pour le recyclage d'une partie du gaz de combustion, et où une partie du gaz de combustion est mélangée dans un mélangeur (18, 19, 20, 35) avec de l'oxygène d'une pureté d'au moins 90% et où le mélange synthétique produit dans les mélangeurs et se composant de gaz de combustion recyclé d'oxygène pur est envoyé aux incinérateurs, **caractérisé en ce que** le système de crémation est formé en unité mobile et disposé dans deux modules de containers (101, 102) séparables l'un de l'autre, étant partagés le long d'un plan séparatif horizontal (103) environ au milieu dans une unité modulaire supérieure et inférieure (102).

2. Système de crémation selon revendication 1, **caractérisé en ce que** le module supérieur (101) est pourvu d'un mélangeur (35) pour le traitement du mélange.

3. Système de crémation selon l'une des revendications 1 ou 2, **caractérisé en ce que** les concentrations d'oxygène des brûleurs sont réglables par les mélangeurs (18, 29, 20) indépendamment l'un de l'autre.

4. Système de crémation selon l'une des revendications 1 à 3, **caractérisé en ce que** l'incinérateur est formé en deux parties étant respectivement disposées dans l'un des deux modules de containers (101, 102).
